(19) Europäisches Patentamt
European Patent Office
Office européen des brevets

(11) **EP 4 354 403 A2**

(12) **EUROPEAN PATENT APPLICATION**

(43) Date of publication:
**17.04.2024 Bulletin 2024/16**

(21) Application number: **24160595.5**

(22) Date of filing: **13.03.2019**

(51) International Patent Classification (IPC):
*G06V 20/56* $^{(2022.01)}$

(52) Cooperative Patent Classification (CPC):
**G01C 21/30; G01C 21/3602; G06F 18/214;**
**G06T 7/75; G06V 10/82; G06V 10/945;**
**G06V 20/56; G06V 20/588;** G06T 2207/10016;
G06T 2207/20076; G06T 2207/20084;
G06T 2207/20221; G06T 2207/30244;
G06T 2207/30256

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **14.03.2018 GB 201804082**
**03.08.2018 GB 201812658**

(62) Document number(s) of the earlier application(s) in
accordance with Art. 76 EPC:
**22197780.4 / 4 145 393**
**19712541.2 / 3 732 657**

(71) Applicant: **Five AI Limited**
**Cambridge CB1 2JH (GB)**

(72) Inventors:
• **MENNEN, Lars**
  **Bristol, BS1 6QS (GB)**
• **REDFORD, John**
  **Bristol, BS1 6QS (GB)**

(74) Representative: **Page White Farrer**
**Bedford House**
**21a John Street**
**London WC1N 2BF (GB)**

Remarks:
This application was filed on 29.02.2024 as a
divisional application to the application mentioned
under INID code 62.

(54) **VEHICLE LOCALIZATION**

(57) In one aspect, a vehicle localization system implements the following steps: receiving a predetermined road map; receiving at least one captured image from an image capture device of a vehicle; processing, by a road detection component, the at least one captured image, to identify therein road structure for matching with corresponding structure of the predetermined road map, and determine a location of the vehicle relative to the identified road structure; and using the determined location of the vehicle relative to the identified road structure to determine a location of the vehicle on the road map, by matching the road structure identified in the at least one captured image with the corresponding road structure of the predetermined road map.

EP 4 354 403 A2

Processed by Luminess, 75001 PARIS (FR)

## Description

## Technical Field

Aspects of this disclosure relates to vehicle localization.

## Background

An autonomous vehicle, also known as a self-driving vehicle, refers to a vehicle which has a sensor system for monitoring its external environment and a control system that is capable of making and implementing driving decisions automatically using those sensors. This includes in particular the ability to automatically adapt the vehicle's speed and direction of travel based on inputs from the sensor system. A fully autonomous or "driverless" vehicle has sufficient decision making capability to operate without any input from a human driver. However the term autonomous vehicle as used herein also applies to semi-autonomous vehicles, which have more limited autonomous decision-making capability and therefore still require a degree of oversight from a human driver.

Accurate vehicle localization may be needed in various contexts, in both autonomous and conventional (manually-driven) vehicles. A common form of localization is based on satellite positioning, such as GPS, where triangulation of satellite positioning signals is used to estimate the vehicle's location. For example, a satellite navigation system (satnav) may determine a vehicle's global location using satellite positioning, and use this to pinpoint the vehicles location on a map, thereby allowing it to provide useful navigation instructions to the driver.

## Summary

A first aspect of the present disclosure provides improved localisation on a map, by matching visually detected road structure with road structure on the map.

A second aspect is the merging of these two sources of information; that is, the merging of the visually detected road structure with the road structure from the map, using the localisation. This is a separate activity, which provides improved road structure awareness, based on the results of the localization (and in fact the merging can be performed using alternative methods of localization as a basis for the merging).

With regards to the localization aspect, whilst satellite positioning may allow the location of a vehicle on a map to be accurately determined in certain situations, it cannot be relied upon to provide an accurate location all of the time. For example, in built-up urban areas and the like, the surrounding structure can degrade the satellite signals used for triangulation, thereby limiting the accuracy with which the vehicle location can be estimated from them. In this context of satellite navigation, this reduced accuracy may not be critical, because the instructions provided by a satnav are ultimately just a guide for the human driver in control of the car. However, in the context of autonomous driving, in which driving decisions may be made autonomously depending on the vehicle's location on a road map, accurately determining that location may be critical. These can be any decisions that need to take into account the surrounding road structure, such as turning, changing lane, stopping, or preparing to do such things, or otherwise changing direction or speed in dependence on the surrounding road structure.

It is also noted that the problem addressed by the present disclosure is one of locating the car on the map, not locating the absolute position of the car (e.g. in GPS coordinates). Even if the GPS detection of position is perfect that may not provide a good location on the map (because the map may be imperfect). The methods described here will improve localisation on a map even when the map is inaccurate.

There are also contexts outside of autonomous driving where it may be desirable to determine a vehicle's location more accurately than is currently possible using GPS or other conventional localization techniques.

A first aspect of the present invention is directed to a vehicle localization method comprising implementing, by a vehicle localization system, the following steps: receiving a predetermined road map; receiving at least one captured image from an image capture device of a vehicle; processing, by a road detection component, the at least one captured image, to identify therein road structure for matching with corresponding structure of the predetermined road map, and determine a location of the vehicle relative to the identified road structure; and using the determined location of the vehicle relative to the identified road structure to determine a location of the vehicle on the road map, by matching the road structure identified in the at least one captured image with the corresponding road structure of the predetermined road map.

That is, by matching visually-identified road structure (i.e. the road structure as identified in the at least one captured image) with corresponding road structure on the predetermined road map, the vehicle's location on the road map can be determined based on its location relative to the visually-identified road structure. This, in turn, can for example feed into a higher-level decision process, such as an autonomous vehicle control process.

In embodiments, the method may comprise a step of using the determined location of the vehicle on the predetermined road map to determine a location, relative to the vehicle, of expected road structure indicated by the predetermined road map.

In this case, accurately determining the location of the vehicle on the road map by matching the structure that can be visually-identified (with sufficient confidence) to the corresponding structure on the map provides, in turn, enhanced structure awareness, because the accurate location of the vehicle on the map can be used to determine the location, relative to the vehicle, of road structure that is expected from the map but which may not be visually identifiable at present (i.e. not identifiable to the road detection component from the at captured image(s) alone), e.g. structure which is currently outside of the field of view of the image capture device or structure which is within the camera's field of view but which cannot be visually-identified (with a sufficient level of confidence) at present for whatever reason.

Once the location of the vehicle on the road map has been determined in this manner, it can be used in various ways. For example, the accurate vehicle location can be used to merge the visually identified road structure with the corresponding road structure on the map. As noted, this is a separate activity from the initial localization based on structure matching, and is performed after localization using the results thereof.

That is, in embodiments, the method may further comprise a step of merging the road structure identified in the at least one captured image with the expected road structure indicated by the predetermined road map, to determine merged road structure and a location of the merged road structure relative to the vehicle.

The merged road structure can provide a higher level of certainty about the vehicle's surroundings than the visual structure identification or the road map can individually. This exploits the fact that there are two comparable descriptions of the road structure currently in the vicinity of the vehicle available (i.e. the visually-identified road structure together with its location relative to the vehicle, and the expected road structure together with its location relative to the vehicle), which be merged to identify characteristics of the actual road structure with greater certainty. That is, it exploits the fact that there are two comparable descriptions of the same thing to identify what that thing is with greater certainty; that thing being the actual road structure in the vicinity of the vehicle.

Whilst the invention can be implemented with single images, preferably, the road structure to be matched with the predetermined road map is identified from a series of images captured over time as the vehicle travels. In this case, the identified road structure comprises historical road structure which the vehicle has observed over any suitable timeframe (which may be in addition to the road structure it is currently observing). This allows the location of the vehicle to be determined with greater accuracy.

Accordingly, the at least one image may be a series of images captured over time such that the identified road structure comprises historical road structure that has been observed by the vehicle.

The road detection component may identify the road structure in the at least one captured image and the location of the vehicle relative thereto by assigning, to each of a plurality of spatial points within the image, at least one road structure classification value, and determining a location of those spatial points relative to the vehicle.

The merging step may comprise merging the road structure classification value assigned to each of those spatial points with a corresponding road structure value determined from the predetermined road map for a corresponding spatial point on the predetermined road map. For example, each of the spatial points corresponds to one pixel of the at least one captured image.

The method may comprise a step of determining an approximate location of the vehicle on the road map and using the approximate vehicle location to determine a target area of the map containing the corresponding road structure for matching with the road structure identified in the at least one captured image, wherein the location of the vehicle on the road map that is determined by matching those structures has a greater accuracy than the approximate vehicle location.

The image capture device may be a 3D image capture device and the location of the vehicle relative to the identified road structure may be determined using depth information provided by the 3D image capture device.

The predetermined road map may be a two dimensional road map and the method may comprise a step of using the depth information to geometrically project the identified road structure onto a plane of the two dimensional road map for matching with the corresponding road structure of the two dimensional road map.

Alternatively, the road map may be a three dimensional road map, the location on the vehicle on the road map being a three dimensional location in a frame of reference of the road map.

The method may comprise a step of determining an error estimate for the determined location of the vehicle on the road map, based on the matching of the visually identified road structure with the corresponding road structure of the road map.

The method may comprise: receiving one or more further estimates of the vehicle's location on the road map, each with an associated indication of error; and applying a filter to: (i) the location of the vehicle on the road map as determined from the structure matching and the error estimate determined therefor, and (ii) the one or more further estimates of the vehicle's location and the indication(s) of error received therewith, in order to determine an overall estimate of the vehicle's location on the road map.

The filter may for example be a particle filter, an extended Kalman filter or an unscented Kalman filter.

The location of the expected road structure may be determined based on the overall estimate of the vehicle's location.

Determining the location of the expected road structure may comprise determining, based on the road map and the error estimate, a plurality of expected road structure confidence values for a plurality of spatial points in a frame of reference of the vehicle.

The merging may be performed in dependence on the expected road structure classification values for those spatial points. The merging may also performed in dependence on detection confidence values determined for those spatial points.

The matching may be performed by determining an approximate location of the vehicle on the road map, determining a region of the road map corresponding to the at least one image based on the approximate location, computing an error between the captured at least one image and the corresponding region of the road map, and adapting the approximate location using an optimization algorithm to minimize the computed error, and thereby determining the said location of the vehicle on the road map.

The determined error estimate may comprise or be derived from the error between the captured image and the corresponding region of the road map upon as computed upon completion of the optimization algorithm.

The method may comprise a step of performing, by a controller of the vehicle, a decision making process based on the determined location of the vehicle on the road map.

The controller may perform the decision making process based on the expected road structure and its determined location relative to the vehicle.

The controller may perform the decision making process based on the merged road structure and its determined location relative to the vehicle.

The vehicle may be an autonomous vehicle and the decision making process may be an autonomous vehicle control process.

The road structure identified in the at least one captured image may comprise a road structure boundary for matching with a corresponding road structure boundary of the road map, and determining the location of the vehicle relative thereto comprises determining a lateral separation between the vehicle and the road structure boundary in a direction perpendicular to the road structure boundary.

The road structure boundary may be a visible boundary. Alternatively, the road structure boundary may be a non-visible boundary that is identified based on surrounding visible road structure. The road structure boundary may be a centre line, for example.

The road structure identified in the at least one captured image may comprise a distinctive road region for matching with a corresponding region of the predetermined road map, and determining the location of the vehicle relative thereto may comprise determining a separation between the vehicle and the distinctive road region in a direction along a road being travelled by the vehicle.

The distinctive road region may be a region marked by road markings. Alternatively or additionally, the distinctive road region is a region defined by adjacent structure. The distinctive road region may be a junction region, for example.

The road structure identified in the at least one captured image may be matched with the corresponding road structure of the predetermined road map by matching a shape of the identified road structure with a shape of the corresponding road structure.

The error estimate may be determined for the determined separation based on a discrepancy between the detected road structure and the corresponding road structure on the road map.

The matching may be weighted according to detection confidence values determined for different spatial points corresponding to the identified road structure.

The detection confidence value at each of the spatial points may be determined in dependence on a confidence associated with the road structure identification at that spatial point and a confidence associated with the depth information at that spatial point.

An orientation of the vehicle relative to the map may also determined by the said matching.

Another aspect of the invention provides a road structure detection system for an autonomous vehicle, the road structure detection system comprising: an image input configured to receive captured images from an image capture device of an autonomous vehicle; a road map input configured to receive a predetermined road map; a localization component configured to determine a current location of the vehicle on the predetermined roadmap; a road detection component configured to process the captured images to identify road structure therein; and a map selection component configured to select, based on the current vehicle location, an area of the road map containing road structure which corresponds to road structure identified by the road detection component in at least one of the captured images, wherein the road detection component is configured to merge the road structure identified in the at least one captured image with the corresponding road structure of the predetermined road map.

A second aspect of the present invention is directed to a road structure detection system for an autonomous vehicle, the road structure detection system comprising: an image input configured to receive captured images from an image capture device of an autonomous vehicle; a road map input configured to receive a predetermined road map; a localization component configured to determine a current location of the vehicle on the predetermined roadmap; a road detection component configured to process the captured images to identify road structure therein; and a map processing component configured to select, based on the current vehicle location, an area of the road map containing road structure which corresponds to road structure identified by the road detection component in at least one of the captured images, wherein the road detection component is configured to merge the road structure identified in the at least one captured image with the corresponding road structure of the predetermined road map.

Another aspect of the invention provides a vehicle localization system, comprising: a map input configured to receive a predetermined road map; an image input configured to receive at least one captured image from an image capture device of a vehicle; a road detection component configured to process the at least one captured image, to identify therein road structure for matching with corresponding structure of the predetermined road map, and determine a location of the vehicle relative to the identified road structure; and a localization component configured to use the determined location of the vehicle relative to the identified road structure to determine a location of the vehicle on the road map, by matching the road structure identified in the at least one captured image with the corresponding road structure of the predetermined road map.

A third aspect of the invention provides a vehicle localization method comprising implementing, in a computer system the following steps: receiving a predetermined road map; receiving at least one road image for determining a vehicle location; processing, by a road detection component, the at least one road image, to identify therein road structure for matching with corresponding structure of the predetermined road map, and determine the vehicle location relative to the identified road structure; and using the determined vehicle location relative to the identified road structure to determine a vehicle location on the road map, by matching the road structure identified in the at least one captured image with the corresponding road structure of the predetermined road map.

A fourth aspect of the invention provides a road structure detection system comprising: an image input configured to receive road images; a road map input configured to receive a predetermined road map; a localization component configured to determine a current vehicle location on the predetermined roadmap; a road detection component configured to process the road images to identify road structure therein; and a map selection component configured to select, based on the current vehicle location, an area of the road map containing road structure which corresponds to road structure identified by the road detection component in at least one of the captured images, wherein the road detection component is configured to merge the road structure identified in the at least one captured image with the corresponding road structure of the predetermined road map.

A vehicle localization system may be provides comprising a road detection component and a localization component configured to implement the method of the third aspect.

The system of the third or fourth aspect may be embodies in a simulator.

That is, the third and fourth aspects may be applied in a simulated environment for the purpose of autonomous vehicle safety testing, validation and the like. Simulation is important in this context to ensure the simulated processes will perform safely in the real-world, and to make any modifications that may be necessary to achieve the very high level of required safety.

Hence, the techniques described herein can be implemented off-board, that is in a computer system such as a simulator which is to execute localization and measurement (e.g. merging of data sources) for modelling or experimental purposes. In that case, the image data may be taken from computer programs running as part of a simulation stack. In either context, an imaging module may operate on the sensor data to identify objects, as part of the system.

It is noted in this respect that all description herein in relation to an image capture device and the like may apply to an imaging module (physical image capture device or software module in a simulator that provides simulated road images). References to the location of a vehicle and the like apply equally to a vehicle location determined in a simulator by applying the disclosed techniques to such simulated road images.

Another aspect of the invention provides a computer program comprising executable instructions stored on a non-transitory computer-readable storage medium and configured, when executed, to implement any of the method or system functionality disclosed herein.

## Brief Description of Figures

For a better understanding of the present invention, and to show how embodiments of the same may be carried into effect, reference is made by way of example to the following figures in which:

Figure 1 shows a highly schematic block diagram of an autonomous vehicle;

Figure 2 shows a function block diagram of a vehicle control system;

Figure 3 shows on the left hand side a flow chart for an autonomous vehicle control method and on the right hand side an example visual illustration of certain steps of the method;

Figure 4 shows an illustrative example of a vehicle localization technique;

Figure 5 shows an illustrative example of a classification-based visual road structure detection technique;

Figure 6 shows an example merging function;

Figure 7 shows an example of filtering applied to multiple location estimates; and

Figure 8 illustrates by example how expected road structure confidence values can be assigned to spatial points in a vehicle's frame of reference.

## Detailed Description

The embodiments of the invention described below provide accurate vehicle localization, in order to accurately locate the vehicle on a map. This uses vision-based road structure detection that is applied to images captured by at least one image capture device of the vehicle. In the described examples, 3D imaging is used to capture spatial depth information for pixels of the images, to allow the visually detected road structure to be projected into the plane of a 2D road map, which in turn allows the visually detected road structure to be compared with corresponding road structure on the 2D map.

The vision based-road structure detection can be implemented using a convolutional network (CNN) architecture, however the invention can be implemented using any suitable road structure detection mechanism and all description pertaining to CNNs applies equally to alternative road structure detection mechanisms. The steps taken are briefly summarized below:

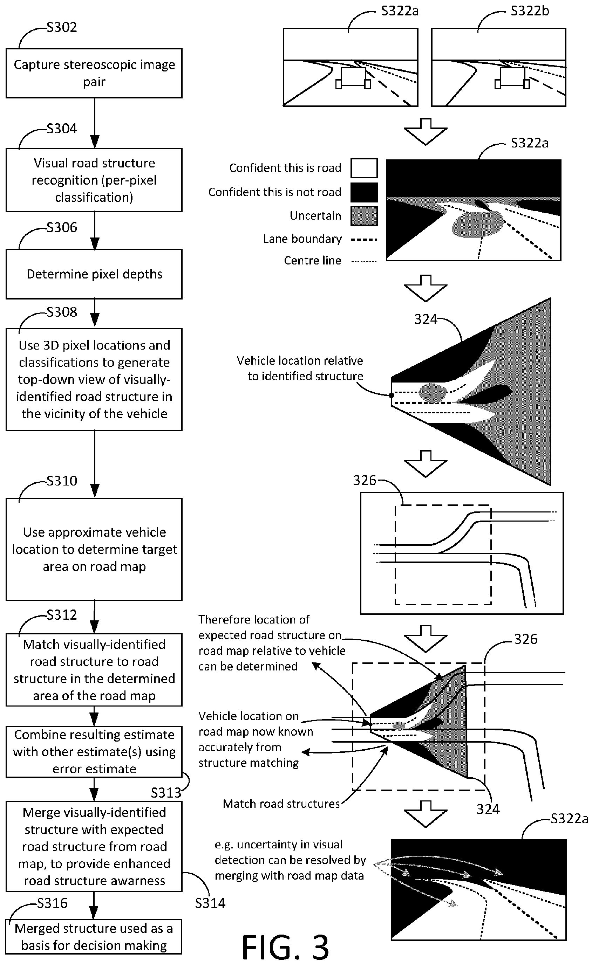

1) Visual road shape detection and road shape from a map are compared. There are various forms the comparison can take, which can be used individually or in combination. Specific techniques are described by way of example below with reference to step S312 in Figure 3.

2) The above comparison allows the vehicle to be positioned on the map. In this respect, it is noted that it is the position and orientation of the vehicle on the map that is estimated, which is not necessarily the vehicle's global position in the world.

3) Multiple such estimates are made over time. These are combined with other estimates of the vehicle's location, such as an estimate of position on the map that GPS gives and/or an estimate determined using odometry (by which it is meant the movement of the vehicle from moment to moment as determined by methods such as vision or IMU or wheel encodings etc.). These estimates can for example be combined using a particle filter (although other methods of combining the estimates could be used).

4) The road shape as indicated by the map, in combination with the calculated location and orientation on the map, is plotted into the (2D or 3D) space around the car. This is then merged with the road shape as detected visually in order to provide a more accurate representation of the road shape, and in particular to allow the data from the map to fill in the areas which are visually occluded (such as behind buildings or around corners).

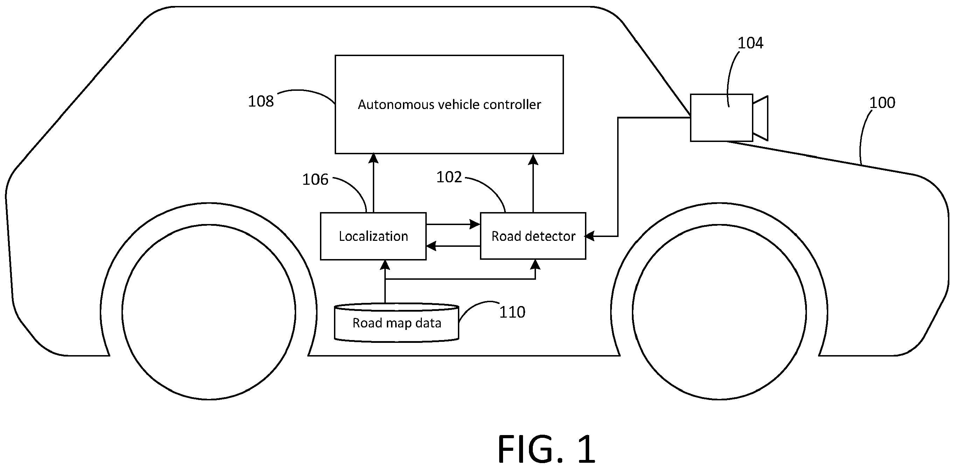

Figure 1 shows a highly-schematic block diagram of an autonomous vehicle 100, which is shown to comprise a road detection component 102 (road detector), having an input connected to an image capture device 104 of the vehicle 100 and an output connected to an autonomous vehicle controller 108.

The road detection component 102 performs road structure detection, based on what is referred to in the art as machine vision. When given a visual input in the form of one or more captured images, the road detection component 102 can determine real-world structure, such as road or lane structure, e.g. which part of the image is road surface, which part of the image makes up lanes on the road, etc. This can be implemented with machine learning, e.g. using convolutional neural networks, which have been trained based on large numbers of annotated street scene images. These training images are like the images that will be seen from cameras in the autonomous vehicle, but they have been annotated with the information that the neural network is required to learn. For example, they may have annotation that marks which pixels on the image are the road surface and/or which pixels of the image belong to lanes. At training time, the network is presented with thousands, or preferably hundreds of thousands, of such annotated images and learns itself what features of the image indicate that a pixel is road surface or part of a lane. At run time, the network can then make this determination on its own with images it has never seen before. Such machine vision techniques are known per-se and are therefore not described in further detail herein.

In use, the trained structure detection component 102 of the autonomous vehicle 200 detects structure within images captured by the image capture device 102, in real time, in accordance with its training, and the autonomous vehicle controller 108 controls the speed and direction of the vehicle based on the results, with no or limited input from any human.

The trained road detection component 102 has a number of useful applications within the autonomous vehicle 100. The focus of this disclosure is the use of machine vision-based road structure detection in combination with predetermined road map data. Predetermined road map data refers to data or a road map or maps that have been created in advance, of the kind currently used in GPS-based navigation units (such as smartphones or "satnavs") and the like, or the kind used by many autonomous driving systems commonly called HD Maps which provide cm accurate detailed information about road and lane boundaries as well as other detailed driving information such as sign and traffic light location. It is expected that optimal results can be achieved using so called high definition (HD) maps of the kind that are becoming available.

One such application is localization, where road structure identified by the trained road detection component 102 can be used to more accurately pinpoint the vehicle's location on a road map (structure-based localization). This works by matching the road structure identified via machine vision with corresponding road structure of the predetermined map. The location of the autonomous vehicle 200 relative to the identified road structure can be determined in three-dimensions using a pair of stereoscopically arranged image capture devices, for example, which in turn can be used to determine the location of the autonomous vehicle on the road map relative to the corresponding road structure on the map.

In this respect, the vehicle 100 is also shown to comprise a localization component 106 having an input connected to receive a predetermined road map held in memory 110 of the vehicle. The localization component 106 can accurately determine a current location of the vehicle 100 in a desired frame of reference and, in particular, can determine a current location of the vehicle on the predetermined road map; that is, the location of the vehicle in a reference frame of the road map (map reference frame). The road map provides an indication of expected road structure and its location within the map reference frame. In the simplest case, the map could show where road centre and/or the road boundaries lie within the map reference frame, for example. However, more detailed maps can also be used, which indicate individual lanes boundaries, identify different lane types (car, bus, cycle etc.), show details of non-drivable regions (pavement/sidewalk, barriers etc.). The road map can be a 2D or 3D road map, and the location on the map can be a location in 2D or 3D space within the map reference frame.

Another application of vision-based road detection merges the visually-identified road structure with corresponding road structure of the road map. For example, the road map could be used to resolve uncertainty about visual road structure detected in the images (e.g. distant or somewhat obscured visual structure). By merging the roadmap with the uncertain visual structure, the confidence of the structure detection can be increased.

These two applications - that is, vision-based localization and structure merging - can be combined, in the manner described below.

In this respect, the localization component 106 is shown to have an input connected to an output of the road detection component 102, and likewise the road detection component 102 is shown to have an input connected to an output of the localization component 106. This represents a set of two-way interactions, whereby vision-based road structure recognition is used as a basis for localization, and that localization is in turn used to enhance the vision-based detection road structure detection. This is described in detail below, but for now suffice it to say that the localization component 106 determines a current location of the vehicle 104 on the road map by matching road structure identified visually by the road detection component 102 with corresponding road structure on the road map. In turn, the determined vehicle location is used to determine expected road structure from the road map, and its location relative to the vehicle, which the road detection component merges with the visually-identified road structure to provide enhanced road structure awareness.

The predetermined road map can be pre-stored in the memory 110, or downloaded via a wireless network and stored in the memory 110 as needed.

The image capture device 104 is a three-dimensional (3D) image capture device, which can capture 3D image data. That is, depth information about visual structure, in addition to information about its location within the image place of the camera. This can for example be provided using stereoscopic imaging, LIDAR, time-of-flight measurements etc. In the examples below, the image capture device 104 is a stereoscopes image capture device having a pair of stereoscopically-arranged image capture units (cameras). The image capture units each capture two dimensional images, but the arrangement of those cameras is such that depth information can be extracted from pairs of two-dimensional (2D) images captured by the cameras simultaneously, thereby providing three-dimensional (3D) imaging. However it will be appreciated that other forms of 3D imaging can be used in the present context. Although only one image capture device 104 is shown in Figure 1, the autonomous vehicle could comprise multiple such devices, e.g. forward-facing and rear-facing image capture devices.

The road detection component 102, the localization component 106 and autonomous vehicle controller 108 are functional components of the autonomous vehicle 100 that represent certain high-level functions implemented within the autonomous vehicle 100. These components can be implemented in hardware or software, or a combination of both. For a software implementation, the functions in question are implemented by one or more processors of the autonomous vehicle 100 (not shown), which can be general-purpose processing units such as CPUs and/or special purpose processing units such as GPUs. Machine-readable instructions held in memory of the autonomous vehicle 100 cause those functions to be implemented when executed on the one or more processors. For a hardware implementation, the functions in question can be implemented using special-purpose hardware such as application-specific integrated circuits (ASICs) and/or field programmable gate arrays (FPGAs).

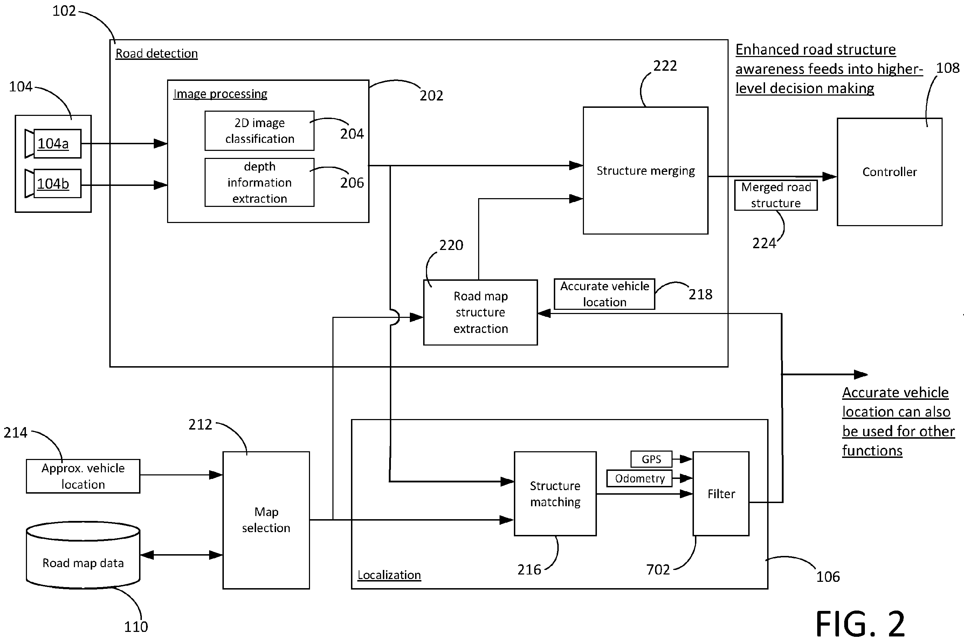

Figure 2 is a functional block diagram of a vehicle control system that is comprised of the road detection component 102, the localization component 106 and the controller 108. Figure 2 shows various (sub)components of the road detection component 102 and the localization component 106, which represent subsets of the functions implemented by those components respectively.

In particular, the road detection component 102 is shown to comprise an image processing component 202 having an at least one input connected to an output of the image capture device 104. The image capture device 104 is shown to comprise a pair of stereoscopically arranged image capture units 104a, 104b, which co-operate to capture stereoscopic pairs of 2D images from which three-dimensional information can be extracted (although, as noted, other forms of 3D imaging can also be used to achieve the same results). In this respect, the image processing component 202 is shown to comprise a 2D image classification component 204 for classifying the 2D images to identify road structure therein, and a depth extraction component 206 which extracts depth information from the stereoscopic image pairs. In combination, this not only allows road structure to be identified within the images but also allows a 3D location of that road structure relative to the vehicle 100 to be estimated. This is described in further detail later.

The vehicle control system of Figure 2 is also shown to comprise a map selection component 212 having an input for receiving an approximate vehicle location 214. The approximate vehicle location 214 is a course estimate of the current location of the vehicle 100 within the map frame of reference, and thus corresponds to an approximate location on the predetermined road map. A function of the map selection component 212 is to select, based on the approximate vehicle location 214, a target area of the roadmap corresponding to a real-world area in the vicinity of the vehicle 100, and retrieve from the memory 110 data of the roadmap within the target area. That is, the portion of the road map contained within the target area.

The localization component 106 is also shown to comprise a structure matching component 216 having a first input connected to an output of the map selection component 212 for receiving the retrieved portion of the road map and a second input connected to an output of the road detection component 102 for receiving the results of the visual road structure detection performed by the image processing component 202. A function of the structure matching component 216 is to match the visually-identified road structure, i.e. as identified by the image processing component 202 of the road structure component 102, with corresponding road structure indicated by the predetermined roadmap within the target area. It does this by searching the target area of the road map for the corresponding structure, i.e. for expected structure within the target area that matches the visually-identified structure. In so doing, the structure matching component 216 is able to more accurately determine the location of the vehicle 100 on the roadmap (i.e. in the map frame of reference) because the 3D location of the vehicle 100 relative to the visually-identified road structure is known from the image processing component 202, which in turn allows the location of the vehicle relative to the corresponding road structure on the road map to be determined once that structure has been matched to the visually-identified structure. The location as estimated based on structure matching is combined with one or more additional independent location estimates (e.g. GPS, odometry etc.), by a filter 702, in order to determine an accurate, overall location estimate from these multiple estimates that respects their respective levels of uncertainty (error), in the manner described below. The accurate vehicle location as determined by the filter 702 is labelled 218.

The accurate vehicle location 218 is provided back to a map processing component 220 of the road detection component 102. The map processing component 220 is shown having a first input connected to an output of the localization component 106 for receiving the accurate vehicle location 218, as determined via the structure matching. The map processing component 220 is also shown to have a second input connected to the map selection component 212 so that it can also receive a portion of the road map corresponding to an area in the vicinity of the vehicle 100. The map processing component 220 uses the accurately-determined location 218 of the vehicle 100 on the road map to accurately determine a location of expected road structure, indicated on the road map, relative to the vehicle 100 - which may be road structure that is currently not visible, in that it is not identifiable to the image processing component 202 based on the most recent image(s) alone or is not identifiable from the image(s) with a sufficiently high level of confidence to be used as a basis for a decision making process performed by the controller 108.

Finally, the road detection component 102 is also shown to comprise a structure merging component 222 having a first input connected to the image processing component 202 and a second input connected to an output of the map processing component 220. Because the location of the visually-identified road structure relative to the vehicle 100 is known by virtue of the processing performed by the image processing component 202 and because the location of the expected road structure indicated on the road map relative to the vehicle is known accurately by virtue of the processing performed by the map processing component 220, the structure merging component 222 is able to accurately merge the visually-identified road structure with the expected road structure indicated on the road map, in order to determine merged road structure 224 that provides enhanced road structure awareness. This enhanced road structure awareness feeds into the higher-level decision-making by the autonomous vehicle controller 108.

As well as being provided to the road detection component 102, the accurate vehicle location 218 as determined by the localization component 106 can also be used for other functions, such as higher-level decision-making by the controller 108.

Figure 3 shows a flowchart for a method of controlling an autonomous vehicle. The method is implemented by the autonomous vehicle control system of Figure 2. As will be appreciated, this is just one example of a possible implementation of the broader techniques that are described above. The flowchart is shown on the left hand side of Figure 3 and to further aid illustration, on the right hand side Figure 3, a graphical illustration of certain method steps is provided by way of example only.

At step S302, a stereoscopic pair of two-dimensional images is captured by the image capture device 104 of the vehicle 100 whilst travelling. At step S304, visual road structure detection is applied to at least one of those images 322a, 322b in order to identify road structure therein.

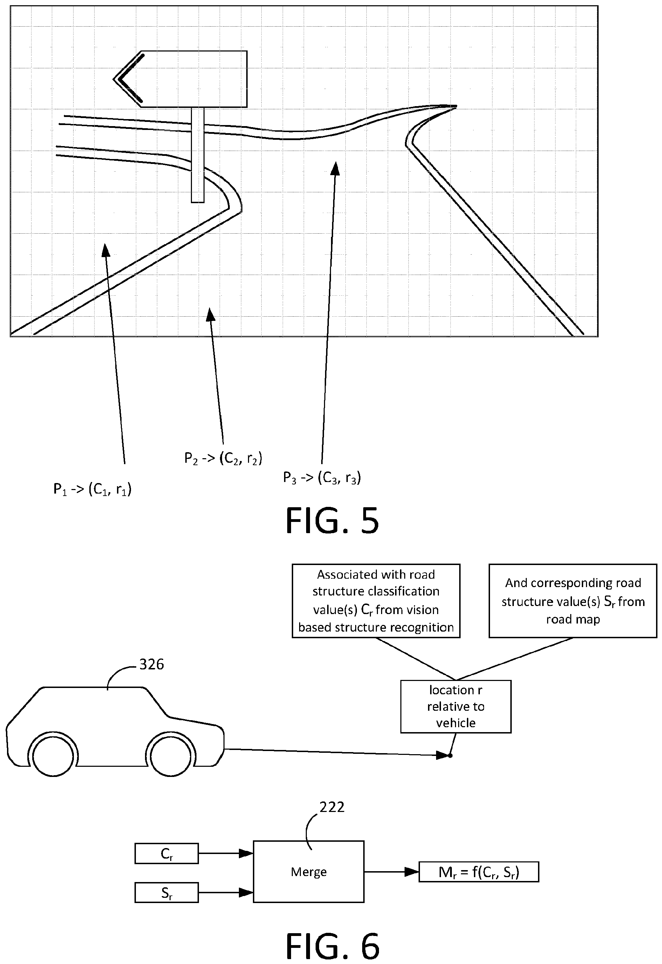

By way of example, the right hand side of Figure 3 shows an example of a visual road structure identification process applied to the first of the images 322a. The visual road structure identification process can be based on a per-pixel classification, in which each pixel of the image 322a is assigned at least one road structure classification value. More generally, different spatial points within the image can be classified individually based on whether or not they correspond to road structure (and optionally the type or classification of the road structure etc.), where spatial points can correspond to individual pixels or larger sub-regions of the image. This is described in further detail later with reference to Figure 5. The classification can be a probabilistic or deterministic classification, however the classification is preferably such that a measure of certainty can be ascribed to each pixel classification. In the simple example of Figure 3, three possible pixel classifications are shown, wherein for any given pixel the image classification component 204 can be confident that that pixel is road (shown as white), confident that the pixel is not road (shown as black) or uncertain (shown as grey), i.e. not sufficiently confident either way. As will be appreciated, this is a highly simplified example that is provided to illustrate the more general principle that the classification of road structure within different parts of an image can have varying levels of uncertainty.

It is also noted that, in this context, uncertainty can arise because of uncertainty in the image classification, but may also depend on the accuracy with which the depth information can be determined: e.g. it may be possible to classify a pixel within a 2D image with a high level of certainty, but if the depth of that pixel cannot be determined accurately, then there is still significant uncertainty about where the corresponding point lies in 3D space. In general, this translates to greater uncertainty as to the classification of points further away from the vehicle.

A simple way of addressing this is to omit pixels without sufficiently accurate depth information. Another way to deal with this is to generate estimates of depth using CNNs on a single image. These can provide a depth estimate everywhere and could be pulled into line with the places where actual depth information exists from stereo, lidar etc. to make a consistent depth estimate for all pixels.

Further or alternatively, this uncertainty - both in the vision based structure detection and also the depth detection - can be captured in detection confidence values assigned to different spatial points (see below). The varying confidence levels over spatial position can, in turn, be accounted for in performing both the matching and the merging steps, as described below.

As well as being able to identify road regions vs. non-road regions, the image classification 204 is also able to identify pixels that lie on the boundaries between lanes of a road (shown as a thick dotted line) and pixels that lie on a centre line of an identified lane. Note that the lane boundaries and centre lines may or may not be visible in the images themselves because non-visible road structure boundaries may be identifiable by virtue of surrounding visible structure. For example a non-visible centreline of a lane may be identifiable by virtue of the visible boundaries of that lane. This applies more generally to any road structure boundaries that may be identifiable to the image classification component 204.

At step S306 depth information is extracted from the stereoscopic image pair 322a, 322b. This can be in the form of depth values that are assigned to each pixel (or spatial point) of the classified image 322a. Based on steps S304 and S306, respective road structure classification values can be associated with a set of 3D locations relative to the vehicle 100 (i.e. in the frame of reference of the vehicle 100), thereby providing 3D road structure identification.

The road structure classification values in combination with their associated 3D locations relative to the vehicle 100 are collectively referred to as 3D visually-identified road structure.

Steps S308 to S312 as described below represent one way in which the visually-identified road structure can be matched with expected road structure on the roadmap. These apply to a 2D roadmap that provides a conventional "top-down" representation of the areas it maps out. To allow the 3D visually-identified road structure to be matched with corresponding road structure on the 2D road map, at step S308 a geometric transformation of the 3D visually-identified road structure is performed in order to generate a top-down view of the visually-identified road structure in the vicinity of the vehicle. The transformation of step S308 is performed by geometrically projecting the 3D visually-identified structure into the 2D plane of the roadmap, to determine 2D visually-identified road structure 324 in the plane of the road map.

The projection of the image into a top down view is done so that the top down view is parallel to the plane that the map was generated in. For example, the map plane is usually identical or very nearly identical to the plane that is perpendicular to gravity, so the 2D plane the road detection is mapped into (before merging with the map) can be oriented according to gravity as detected by an accelerometer(s) in the vehicle, on the assumption that the plane of the road map is perpendicular to the direction of gravity.

At step S310 the approximate current vehicle location 214 is used to select the target area on the roadmap - labelled 326 - corresponding to the actual area currently in the vicinity of the travelling vehicle 100.

At Step S312, a structure matching algorithm is applied to the 2D visually-identified road structure 324 with respect to the target area 326 of the roadmap to attempt to match the visually-identified road structure to corresponding road structure indicated within the target area 326 of the road map.

This matching can take various forms, which can be used individually or in combination, for example:

**Comparison A:** One comparison generates an estimate for the lateral position of a car (or other vehicle) on the road (e.g. distance from road centre line). E.g. i) by defining a circle around the car and expanding it until it hits the road centre line, with the lateral position being estimated as the radius of the circle at that point; r e.g. ii) fitting a spline to the detected road centre line and finding the perpendicular distance of the car from that spline. Using a spline has the advantage that it merges detections of where the centre line is from all along the road giving a more accurate position for the detected centre line near to the car (rather than using just the detection of the centre line nearby the car as in i)).

**Comparison B:** Another comparison generates an estimate for the longitudinal position of the car on the road (e.g. distance from previous or next junctions). E.g. using another CNN to detect junctions (as well as the CNN that detects road shape).

**Comparison C:** Another comparison generates an estimate for the orientation of the car on the map (i.e. an orientation error between detected road shape and road shape on map). E.g. by comparing the orientation of the visually detected road centre with the orientation of the road on the map.

**Comparison D:** Performing image matching of the visually detected road shape with a corresponding image of the road shape generated from the map using an assumed (proposed) location and orientation of the vehicle on the map. E.g. this can be done by recursively adapting the assumed location and orientation of the vehicle on the map (which in turn changes the contents of the corresponding image generated form the map), with the aim of optimizing an overall error as defined between the two images. The overall error can be captured in a cost function, which can for example be a summation of individual errors between corresponding pixels of the two images. These individual error between two pixels can be defined in any suitable way, e.g. as the mean square error (MSE) etc. The cost function can be optimized using any suitable optimization algorithm, such as gradient descent etc. To begin with, the assumed location is the approximate vehicle location 214, which is gradually refined through the performance of the optimization algorithm, until that algorithm completes. Although not reflected in the graphical illustrations on the right hand side of Figure 3, in this context the target area 326 is an area corresponding to the field of view of the image capture device 202 at the assumed vehicle location and orientation on the map, which can be matched to the road structure detected within the actual field of view as projected into the plane of the road map. Changing the assumed location/orientation of the vehicle in turn changes the assumed location/orientation of the field of view, gradually bringing it closer to the actual field of view as the cost function is optimized.

Comparison D provides a complete description of the vehicle's position and heading in 2D space using a single process. When used in combination, comparisons A to C provide the same level of information, i.e. a complete description of the vehicle's pose and heading in 2D, and do so relatively cheaply in terms of computing resources, because they use a simpler form of structure matching and hence avoid the need for complex image matching.

It is also noted that the techniques can be extended to a 3D road map, using various forms of 3D structure matching, in order to locate the vehicle on the 3D road map, i.e. in a 3D frame of reference of the 3D road map.

As indicated, the matching can also be weighted according to the confidence in the visual road structure detection, to give greater weight to spatial points for which the confidence in the vision-based detection is highest. The confidence can be captured in detection confidence values assigned to different spatial points in the vehicle's frame of reference, within the projected space, i.e. within the plane of the road map into which the detected road structure has been projected at step S308.

As well as taking into account the confidence in the vision-based structure detection, the detection confidence values could also take into account the confidence in the depth detection, by e.g. weighting pixels in the projected space by confidence that is a combination of vision-based detection confidence and depth detection confidence.

For example, with a cost-based approach (comparison D), the individual errors in the cost function could be weighted according to confidence, in order to apply a greater penalty to mismatches on pixels with higher detection confidence.

Having thus matched the visually-identified road structure with the expected structure in the target area of the roadmap, the location of the vehicle 100 on the road map (i.e. in the map frame of reference), can be determined based on the location of the vehicle 100 relative to the visually-identified road structure (which directly corresponds to the location of the visually-identified road structure relative to the vehicle 100). With comparison D, this determination is made as an inherent part of the image matching process.

As well as estimating the location and (where applicable) the orientation of the vehicle, an estimate is made as to the error of that estimate. That is, as estimate of the uncertainty in the vision-based estimate. This error is also estimated based on the comparison of the visually-identified structure with the corresponding map structure.

For comparison D, the cost function-based approach inherently provides a measure of the error: it is the final value of the cost function, representing the overall error between the two images, once the optimization is complete.

For the other comparisons, various measures can be used as a proxy for the error. For example, with comparison A (lateral offset), the error can be estimated based on a determined difference between the width of a road or lane etc. as determined from vision-based structure recognition and the width of the road or lane etc. on the map, on the basis that, the greater the discrepancy between the visually-measured width and the width on the map, the greater the level of uncertainty in the lateral position offset. In general, an error in the location/orientation estimate can be estimated by determining discrepancy between a part or parts of the visually identified road structure that is/are related to the location/orientation estimate in question and the corresponding part or parts of the road structure on the map.

Although the above has been described with reference to a single captured image for simplicity, as noted, the structure mapping can take into account previously detected (historical) road structure, from previously captures image(s) which capture the road along which the vehicle has already travelled. For example, as the vehicle travels, a "live" map can be created of the area travelled by the vehicle and its constituent structure (for comparison with the predetermined road map). The live map includes historical road structure which can be used in conjunction with the road structure that is currently visible to assist in the matching. That is, preferably vehicle's current location on the road map is determined based on a series of images captured over time, in order to take into account historical road structure previously encountered by the vehicle. In that case, the matching is performed over a suitable target area that can accommodate the relevant historical road structure. The series of images can for example be combined to create the live map based on structure matching applied across the series of images after they have been transformed into the top-down view (i.e. by matching structure detected across the series of images in the plane of the road map). Accordingly all description herein pertaining to a captured image applies equally to a series of such images that are combined to provide awareness of historical road structure encountered by the vehicle.

This is preferable as the length and accuracy of the road detected behind the vehicle that the vehicle has already travelled along will be greater than the length and accuracy of the road detected in front of the vehicle where it is yet to travel. Historical road detection may therefore be as important or more important than just what is seen in front of the vehicle (in the case of a forward-facing camera).

At step S313, the location/orientation estimate as described from the matching is combined with one or more corresponding location/orientation estimates from one or more additional sources of location/orientation information, such as satellite positioning (GPS or similar) and/or odometry. The (or each) additional estimate is also provided to the filter 702 with an indication of the error in that estimate.

As shown in Figure 3, the output of the structure matching is one of multiple inputs to the form of the filter 702, which operates as a location determining component, and uses a combination of the location determined from structure matching and the one or more additional sources of location information (such as GPS, odometry etc.) to determine the accurate vehicle location 218 on the map. This can take into account the current accuracy with which each source is currently able to perform localization, and give greater weight to the sources that are currently able to achieve the highest level of accuracy. For example, greater weight could be given to the structure matching-based localization as GPS accuracy decreases.

In other words, the different location/orientation estimates are combined in a way that respects their respective errors, so as to give greater weight to lower error estimates i.e. the estimates made with a greater degree of certainty. This can be formulated as a filtering problem within a dynamic system, in which the different estimates are treated as noisy measurements of the vehicle's actual location/orientation on the map. One example of a suitable filter that can be used to combine the estimates in this way is a particle filter. In this context, the error on each estimate is treated as noise generated according to a noise distribution. An extended Kalman filter or an unscented Kalman filter could also be used. Both these and particle filters are able to deal with non-Gaussian and non-linear models.

The form of the noise distribution can be an assumption built into the system, e.g. the noise distribution could be assumed to be Gaussian, having a variance corresponding to the error in that estimate (as determined in the manner described above). Alternatively, the form of the distribution could be determined, at least to some extent, through measurement, i.e. based on the comparison of the visual road structure with the road structure on the map.

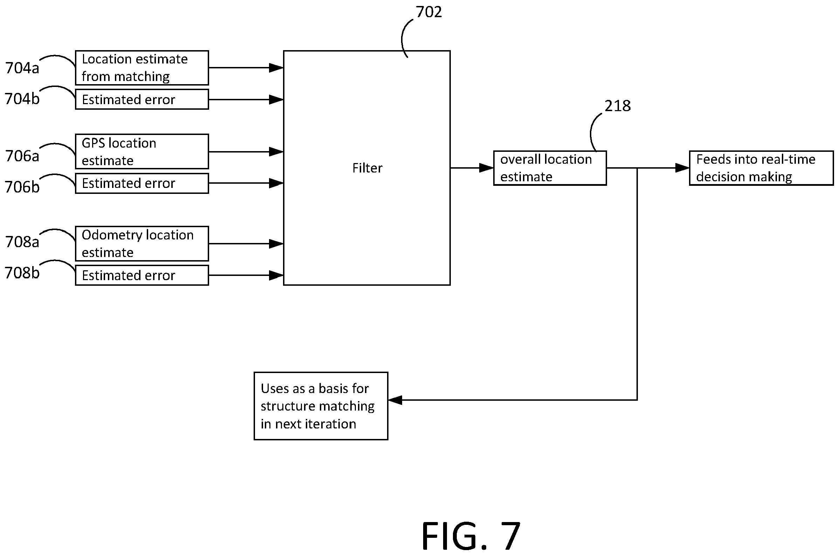

By way of example, Figure 7 shows the filter 702 of Figure 2 as having inputs for receiving:

1. A location estimate 704a from the visual matching of step S312, and an associated error estimate 704b;
2. A location estimate 706a from a satellite position system of the vehicle 100 (not shown), and an associated error estimate 706b;
3. A location estimate 708a from an odometry system of the vehicle 100 (not shown), and an associated error estimate 708b.

Odometry is the use of data from one or more motion sensors to estimate the path taken by the vehicle 100 over time. These can for example be accelerometers and/or gyroscopes. Further or alternatively, odometry can also be applied to captured images (visual odometry). Odometry, including visual odometry, is known in the art, as are techniques for estimating the associated error, therefor this is not described in detail herein.

The filter 702 fuses (combines) the received location estimates 704a-708a, based on their respective error indications 704b-708b, to provide the overall location estimate 218, which respects the indicated errors in the individual estimates 704a-708a, the overall location estimate 218 being an overall estimate of the location of the vehicle 100 on the map.

The filter 702 treats each of the estimates as a noisy signal and uses the error indicated for each estimate704a-708a to model a noise distribution for that signal, in order to determine the overall location estimate 218, as an underlying state of the vehicle 101 giving rise to the noisy signals.

Having obtained an accurate estimate of the vehicle's location on the map in this manner, this in turn allows the location of expected road structure indicated on the roadmap to be accurately determined relative to the vehicle 100, i.e. in the reference frame of the vehicle 100. That is, because the location of the expected road structure and the location of the vehicle are both known in the reference frame of the road map, this in turn makes it possible to determine the location of the expected road structure relative to the vehicle 100.

Moving to step S314, now that both the location of the visually-identified road structure relative to the vehicle 100 is known, by virtue of steps S304 and S306, and the location of the expected road structure indicated on the roadmap is known relative to the vehicle 100 (from the overall estimate 218), by virtue of steps S312 and S313, the visually-identified road structure can been merged with the expected road structure at step S314 in order to determine the merged road structure 224. The merged road structure 224 draws on a combination of the information obtained via the visual identification and the information that can be extracted from the roadmap about the vehicle's immediate surroundings, and thus provides the controller 108 with an enhanced level road structure awareness that could not be provided by the road map or the vision-based structure detection alone.

The merging can for example allow uncertainties in the vision-based road structure detection to be resolved or reduced, as illustrated by way of example for the classified image 322a. That is, to fill in "gaps" in the vehicle's vision. For example, a junction that the vehicle wants to take may not be visible currently because it is obscured, but the location of the junction can be filled in with the map data so that the vehicle can be sure of its location.

The merging respects the level of uncertainty that is associated with the vision-based information and the map-based information at different points. This can be achieved by weighting pixels in the captured image and the corresponding image derived from the road map according to uncertainty.

The confidence in the vision-based road structure detection can be determined as an inherent part of the computer vision process, and captured in detection confidence values as described above. For example, when probabilistic segmentation (pixel-level classification) is used as a basis for the road structure detection, the uncertainty in the visually detected road structure is provided by way of class probabilities assigned to different pixels for different road structure classes, which serve as detection confidence values. As noted, the detection confidence values could also take into account depth detection confidence in the projected space.

Uncertainty in the surrounding road structure as determined from the map arises from uncertainty in the estimate of the vehicle's location and orientation on the map. The effect of this in practice is some "blurring" at expected road structure boundaries, e.g. at the edges of the road.

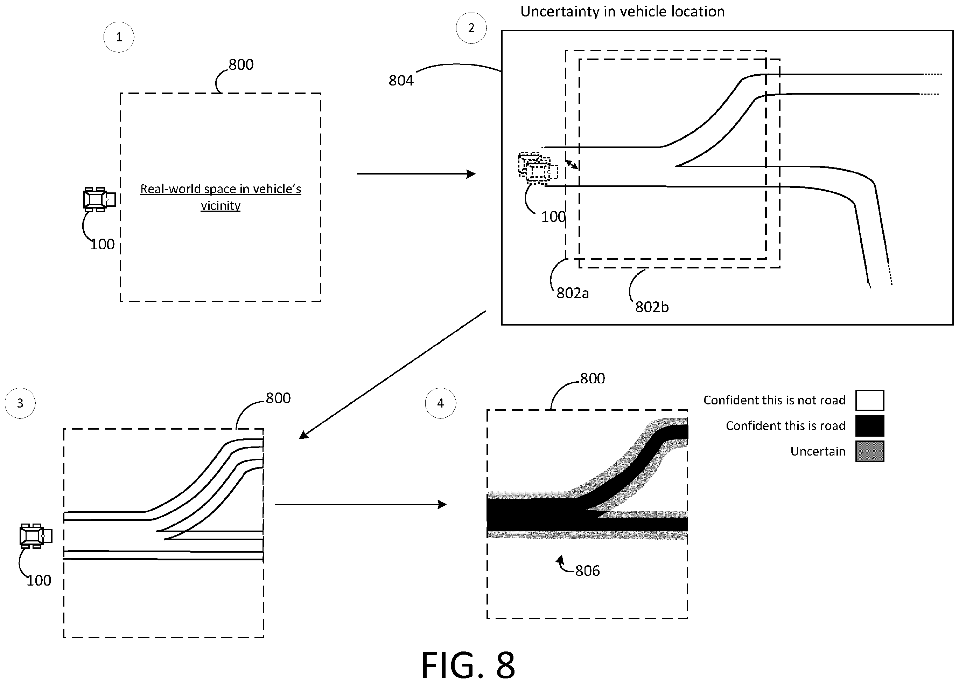

Figure 8 illustrates this phenomenon by example. When there is uncertainty in the vehicle's location/orientation on the map, this in turn means there is uncertainty in the location/orientation of expected road structure relative to the vehicle. Figure 8 shows an area 800 of real-world space in the vicinity of the vehicle 100 (1). From the estimate of the vehicle's location on a map 804, it is possible to infer what road structure is expected in the real-world space 800 according to the map (2). However, because of the uncertainty in the location estimate, there is a range of locations at which the expected road structure might actually lie relative to the vehicle 100, within the real-world space 800 (3).

As a consequence, there will be certain locations within the real-world space 800 at which it is possible to conclude there is road with total confidence assuming the map is accurate. This is because, although the vehicle 100 might be at one of a range of locations on the map 804 (the vehicle location error range, as defined by the error in the location estimate), there are certain locations relative to the vehicle 100 that are either definitely road or definitely not road irrespective of where the vehicle is actually located within the vehicle location error range.

By contrast, there are other locations relative to the vehicle which could be either road or not road depending on where the vehicle 100 is actually located within the vehicle location error range.

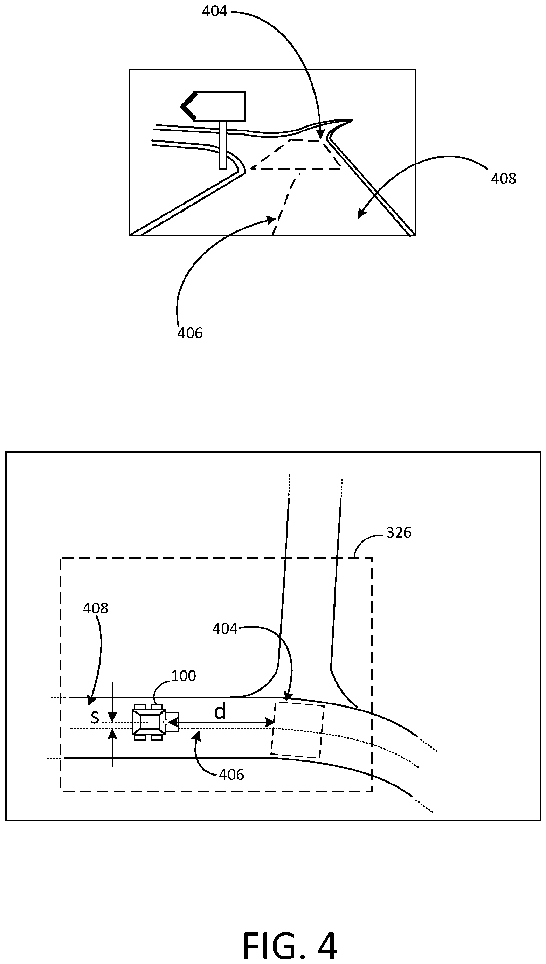

It is thus possible to classify each point within the real-world space 800 using the road map and, by taking into account all of the possible locations of the expected road structure relative to the vehicle based 100 on the error in the estimate of its location on the map 804, it is possible to assign an expected road structure confidence value to each location within the real-world space 800, denoting a confidence in the map-based classification of that point (4), which reflects the uncertainty arising due to the error in the vehicle location estimate 218 (expected road structure confidence value). In Figure 4, the expected road structure confidence values 806 are represented using shading. For the sake of simplicity, only three levels of confidence are shown (black: confident there is road at the corresponding locations; white: confident there is no road at the corresponding locations; grey: uncertain whether it is road or not road at the corresponding locations), however as will be appreciated this can be generalized to a more fine-grained (e.g. continuous) confidence values allocation scheme.

When it comes to merging the visually-detected road structure with the expected road structure on the map, the merging takes account of their respective confidence levels, and in particular any spatial variations in those confidence levels. This means that, at any given point in the real-world space 800, the merged structure at that point reflects the respective levels of confidence in the visual-based structure detection and the map-based road structure inference at that point (and possibly also the confidence in the depth detection). The merged road structure can for example be determined as a pointwise combination (e.g. summation) of the visually detected road structure with the expected road structure assigned from the map, weighted according to their respective confidence values - see below, with reference to Figure 6.

The merged structure 224 can be used as a basis for decision-making by the controller 108 in the manner described above.

As will be appreciated, step S308 as described above allows the described methods to be imprinted with a 2D roadmap. With a 3D roadmap, this transformation step may be omitted. For example, with a 3D roadmap, the structure matching could be based on 3D structure matching.

The method of Figure 3 is an iterative method, in which the localization and merging steps are repeated continuously as the vehicle 100 travels and new images are captured. That is, the structure matching-based localization is performed repeatedly to continuously update the vehicle location on the road map, ensuring that an accurate vehicle location on the road map is available at the end of each iteration, which in turn can be used to maintain a consistently high level of structure awareness through repeated structure merging at each iteration based on the most-recently determined vehicle location.

This in turn can be used as a basis for one or more decision-making processes implemented by the controller 108 (S316, Figure 3), in which the controller 108 uses the knowledge of where the surrounding road structure is currently located relative to the vehicle 100 to make driving decisions autonomously. The right hand side of Figure 3 shows, next to steps S314 and S316, a view corresponding to the original image, in which the uncertainty has been resolved. However it is noted that this is just for the purposes of illustration: there is no need to transform back into the plane of the images, as the merging that drives the decision making can be performed in the plane of the road map.

The approximate vehicle location 214 used to select the target area of the road map need only be accurate enough to facilitate a sufficiently fast search for matching road structure within the target area - generally speaking, the more accurate the approximate vehicle location 214 is, the smaller the target area that needs to be searched. However it is not be accurate enough in itself to serve as a basis for higher-level decision-making reliably, which is the reason it is desirable to determine the more accurate vehicle location 218. As indicated in Figure 7, the approximate vehicle 214 location can for example be the location of the vehicle that was determined based on structure matching and filtering in a previous iteration(s) of the method, or derived from such a value based on the vehicle's speed and direction. That is, based on the previously captured location estimates as combined using filtering.

As noted, the structure matching of step S312 can be performed in various ways, for example a shape of the visually-identified road structure can be matched with a shape of the corresponding road structure. This is particularly suitable where the road structure has a distinctive shape. For example, winding roads and lanes may be matched accurately to the corresponding part of the road map.

Figure 4 shows another example of how this matching can be performed. In Figure 4, the matching is based on the visual identification of a junction or other distinctive road region within the captured image, together with the identification of the centre line or other road structure boundary. In this example, the centre line is the line running approximately down the centre of the "ego lane" 408; that is, the lane in which the vehicle 100 is currently driving. At the top of the Figure 4, an image 402 containing the identified junction 404 and the identified centreline 406 is shown. The distance "d" between the vehicle and the identified junction is determined, as is a lateral offset "s" between the vehicle 100 and the centre line 406. By matching the visually identified junction 402 to a corresponding junction in the target area 326 of the road map, and matching the visually identified centre line 406 to the location of the centre line on the road map, the location of the vehicle on the roadmap within the ego lane 408 can be accurately determined based on d and s, as shown in the bottom half of Figure 4.

Figure 5 shows an example of an image classification scheme that can be used as a basis for the road structure identification of step S304. Different road structure classification values $C_1, C_2, C_3$ are assigned to different spatial points $P_1, P, P_3$ within the image 502 ($c_n$ denotes one or more road structure classification values determined for point $P_n$). The spatial points correspond to sub regions of the image which can be individual pixels or larger sub-regions. The classification value or values $C_n$ assigned to a particular point $P_n$ can be probabilistic or deterministic. The classification can a simple classification scheme e.g. in which each spatial point is classified based on a binary road/not road classification scheme. Alternatively one or more of the spatial points

$P_n$ could be assigned multiple classification values. For example, in the image 502 of Figure 5, certain points could be classified as both road and junction or as both road and centre line.

As will be appreciated, the level of granularity at which road structure is detected can be chosen to reflect the granularity of the road map. For example, it may be useful to detect lane edges, lane centres, road centre, etc. if such structure can be matched with corresponding structure on the road map.

By determining a depth value for each spatial point $P_n$ at step S306, a 3D location $r_n$ relative to the vehicle 100 can be determined for each point $P_n$ based on its 2D location within the plane of the image 502 and its determined depth. That is, a 3D position vector $r_n$ in the frame of reference of the vehicle 100 plus one or more associated road structure classification values.

Figure 6 illustrates one possible way in which the merging component 222 can be implemented based on the classification scheme of Figure 5. Now that the location of the vehicle on the road map is known, any given location r relative to the vehicle 100 and within the plane of the road map can be assigned one or more road structure values $S_r$ based on any road structure that is indicated on the corresponding point on the road map, assuming the map is complete. For an incomplete road map, a subset of points can still be classified based on the road map. Moreover, some such locations will also have been assigned one or more road structure classification values $C_r$ via the vision-based structure identification. When a given location r relative to the vehicle is associated with one or more structure classification values $C_r$ derived from the vision-based structure detection, and also one or more corresponding road structure value(s) $S_r$ derived from the road map, the merging component 222 merges the one or more road structure values $S_r$ with the one or more road structure classification values $C_r$ to generate a merged road $M_r$ structure value for that location $r$:

$$M_r = f(C_r, M_r)$$

where $f$ is a merging function that respects the level of uncertainty associated with the different types of road structure value. By doing this over multiple such points, the merging component can determine the merged road structure 224 as a set of merged road structure values each of which is associated with a location relative to the vehicle.

For example, one way to perform the merging is build a third image (merged image) based on the two input images, i.e. an image of visually detected road shape and an image of road shape as plotted from the map, e.g. by taking a weighted average of the two images. In this case, the merged values correspond to pixels of the two images to be merged, where the values of those pixels denote the presence or absence of (certain types of) road structure.

For example, of $C_r$, $M_r$ could be confidence values for a particular class of road structure, determined in the manner described above, such that $f(C_r, M_r)$ takes into account both the confidence in the detection confidence at spatial point r in the vehicle's frame of reference and also the confidence with which an inference can be drawn from the map at that point r.

It will be appreciated that the above embodiments have been described only by way of example. Further aspects and embodiments of the invention include the following.

Another aspect of the invention provides localization system for an autonomous vehicle, the localization system comprising: an image input configured to receive captured images from an image capture device of an autonomous vehicle; a road map input configured to receive a predetermined road map; a road detection component configured to process the captured images to identify road structure therein; and a localization component configured to determine a location of the autonomous vehicle on the road map, by matching the road structure identified in the images with corresponding road structure of the predetermined road map.

A vehicle control system may be provided which comprises the localization system and a vehicle control component configured to control the operation of the autonomous vehicle based on the determined vehicle location.

Another aspect of the invention provides a road structure detection system for an autonomous vehicle, the road structure detection system comprising: an image input configured to receive captured images from an image capture device of an autonomous vehicle; a road map input configured to receive predetermined road map data; and a road detection component configured to process the captured images to identify road structure therein; wherein the road detection component is configured to merge the predetermined road map data with the road structure identified in the images.

A vehicle control system may be provided, which comprises the road structure detection system and a vehicle control component configured to control the operation of the autonomous vehicle based on the merged data.

Another aspect of the invention provides a control system for an autonomous vehicle, the control system comprising: an image input configured to receive captured images from an image capture device of an autonomous vehicle; a road map input configured to receive a predetermined road map; a road detection component configured to process the captured images to identify road structure therein; and a map processing component configured to select a corresponding road structure on the road map; and a vehicle control component configured to control the operation of the autonomous vehicle based on the road structure identified in the captured images and the corresponding road structure selected on the predetermined road map.

In embodiments, the control system may comprise a localization component configured to determine a current location of the vehicle on the road map. The road detection component may be configured to determine a location of the identified road structure relative to the vehicle. The map processing component may select the corresponding road structure based on the current location of the vehicle, for example by selecting an area of the road map containing the corresponding road structure based on the current vehicle location (e.g. corresponding to an expected field of view of the image capture device), e.g. in order to merge that area of the map with the identified road structure. Alternatively, the map processing component may select the corresponding vehicle structure by comparing the road structure identified in the images with the road map to match the identified road structure to the corresponding road structure, for example to allow the localization component to determine the current vehicle location based thereon, e.g. based on the location of the identified road structure relative to the vehicle.

Other embodiments and applications of the present invention will be apparent to the person skilled in the art in view of the teaching presented herein. The present invention is not limited by the described embodiments, but only by the accompanying claims.

## Claims

1. A vehicle localization method comprising implementing, by computer system, the following steps:

   receiving a predetermined road map;
   receiving at least one captured image from an image capture device of a vehicle;
   processing, by a road detection component, the at least one captured image, to identify therein road structure for matching with corresponding structure of the predetermined road map, and determine a location of the vehicle relative to the identified road structure;
   using the determined location of the vehicle relative to the identified road structure to determine a location of the vehicle on the road map, by matching the road structure identified in the at least one captured image with the corresponding road structure of the predetermined road map;
   using the determined location of the vehicle on the predetermined road map to determine a location, relative to the vehicle, of expected road structure indicated by the predetermined road map; and
   merging the road structure identified in the at least one captured image with the expected road structure indicated by the predetermined road map, to determine merged road structure and a location of the merged road structure relative to the vehicle.

2. A method according to claim 1, wherein the road detection component identifies the road structure in the at least one captured image and the location of the vehicle relative thereto by assigning, to each of a plurality of spatial points within the image, at least one road structure classification value, and determining a location of those spatial points relative to the vehicle.

3. A method according to claim 2, wherein the merging is performed in dependence on the expected road structure classification values for those spatial points.

4. A method according to claims 3, wherein the merging step comprises merging the road structure classification value assigned to each of those spatial points with a corresponding road structure value determined from the predetermined road map for a corresponding spatial point on the predetermined road map.

5. A method according to an claims 2 to 4, wherein each of the spatial points corresponds to one pixel of the at least one captured image.

6. A method according to any preceding claim, comprising a step of determining an approximate location of the vehicle on the road map and using the approximate vehicle location to determine a target area of the map containing the corresponding road structure for matching with the road structure identified in the at least one captured image, wherein the location of the vehicle on the road map that is determined by matching those structures has a greater accuracy than the approximate vehicle location.

7. A method according to any preceding claim, wherein the image capture device is a 3D image capture device and the location of the vehicle relative to the identified road structure is determined using depth information provided by the 3D image capture device.

8. A method according to claim 7, wherein the predetermined road map is a two-dimensional road map and the method comprises a step of using the depth information to geometrically project the identified road structure onto a plane of the two dimensional road map for matching with the corresponding road structure of the two dimensional road map.

9. A method according to any of claims 1 to 7, wherein the road map is a three-dimensional road map, the location on the vehicle on the road map being a three dimensional location in a frame of reference of the road map.

10. A method according to any preceding claim, wherein the matching is performed by determining an approximate location of the vehicle on the road map, determining a region of the road map corresponding to the at least one image based on the approximate location, computing an error between the captured at least one image and the corresponding region of the road map, and adapting the approximate location using an optimization algorithm to minimize the computed error, and thereby determining the said location of the vehicle on the road map.

11. A method according to any preceding claim, wherein the road structure identified in the at least one captured image is matched with the corresponding road structure of the predetermined road map by matching a shape of the identified road structure with a shape of the corresponding road structure.

12. A method according to any preceding claim, comprising a step of performing, by a controller of the vehicle, a decision-making process based on the determined location of the vehicle on the road map, wherein the controller performs the decision-making process based on the merged road structure and its determined location relative to the vehicle.

13. A road structure detection system, comprising:

a map input configured to receive a predetermined road map;
an image input configured to receive at least one road image for determining a vehicle location;
a road detection component configured to process the at least one road image, to identify therein road structure for matching with corresponding structure of the predetermined road map, and determine the vehicle location relative to the identified road structure; and
a localization component configured to use the determined vehicle location relative to the identified road structure to determine a location of the vehicle (100) on the road map, by matching the road structure identified in the at least one road image with the corresponding road structure of the predetermined road map;
wherein the road detection component is further configured to:
use the determined location of the vehicle on the predetermined road map to determine a location, relative to the vehicle, of expected road structure indicated by the predetermined road map; and
merge the road structure identified in the at least one captured image with the expected road structure indicated by the predetermined road map, to determine merged road structure and a location of the merged road structure relative to the vehicle.

14. The road structure detection system of claim 13, embodied in a simulator.

15. A computer program comprising executable instructions stored on a non-transitory computer-readable storage medium and configured, when executed, to implement the method or functionality of any of claims 1 to 12.

FIG. 1

Autonomous vehicle controller

Road detector

Localization

Road map data

100
104
102
106
108
110

Road detection

Image processing
2D image classification — 204
depth information extraction — 206

104a
104b
104

202

Structure merging — 222

Merged road structure — 224

Enhanced road structure awareness feeds into higher-level decision making

Controller — 108

Road map structure extraction — 220

Accurate vehicle location — 218

Localization — 106

Structure matching — 216

GPS
Odometry

Filter — 702

Accurate vehicle location can also be used for other functions

Map selection — 212

Approx. vehicle location — 214

Road map data — 110

FIG. 2

18

S302

Capture stereoscopic image pair

S304

Visual road structure recognition (per-pixel classification)

S306

Determine pixel depths

S308

Use 3D pixel locations and classifications to generate top-down view of visually-identified road structure in the vicinity of the vehicle

S310

Use approximate vehicle location to determine target area on road map

S312

Match visually-identified road structure to road structure in the determined area of the road map

Combine resulting estimate with other estimate(s) using error estimate

S313

Merge visually-identified structure with expected road structure from road map, to provide enhanced road structure awareness

S314

S316

Merged structure used as a basis for decision making

S322a        S322b

S322a

Confident this is road
Confident this is not road
Uncertain
Lane boundary
Centre line

324

Vehicle location relative to identified structure

326

Therefore location of expected road structure on road map relative to vehicle can be determined

Vehicle location on road map now known accurately from structure matching

326

Match road structures

324

S322a

e.g. uncertainty in visual detection can be resolved by merging with road map data

FIG. 3

FIG. 4

$P_2 \rightarrow (C_2, r_2)$

$P_3 \rightarrow (C_3, r_3)$

$P_1 \rightarrow (C_1, r_1)$

# FIG. 5

Associated with road structure classification value(s) $C_r$ from vision based structure recognition

And corresponding road structure value(s) $S_r$ from road map

location r relative to vehicle

326

222

$C_r$

$S_r$

Merge

$M_r = f(C_r, S_r)$

# FIG. 6

FIG. 7

FIG. 8